# EUROPEAN PATENT APPLICATION

(11) **EP 1 785 908 A2**
(43) Date of publication of application: **16.05.2007**
(21) Application number: 06022842.6
(22) Date of filing: 02.11.2006
(51) Int. Cl.: G06F 21/20, G06F 21/02

(54) **Portable electronic apparatus, ic card, data processing apparatus and data processing system**

(30) Priority: 02.11.2005 JP 2005319767
(71) Applicant: KABUSHIKI KAISHA TOSHIBA, Tokyo 105-8001 (JP)
(72) Inventor: Kamoi, Makoto Intellectual Property Division, Minato-ku Tokyo 105-8001 (JP)
(74) Representative: HOFFMANN EITLE

(57) **Abstract**

In an IC card (1), authentication information used for authentication processing in an external apparatus (2) is stored in a memory (12), and a counter (14) which counts the number of times of executing read processing with respect to the authentication information is provided. The IC card (1) counts up the counter (14) every time an authentication information read request is received from the external apparatus (2). The IC card (1) reads the authentication information from the memory (12) and transmits the read information to the external apparatus (2) in response to the authentication information read request when a value of the counter (14) is less than a predetermined upper limit value, and prohibits reading the authentication information from the memory (12) when the value of the counter (14) is not smaller than the predetermined upper limit value.

## Description

The present invention relates to an IC card having a module consisting of an IC chip or the like embedded in a card-like main body, a portable electronic apparatus such as a small electronic apparatus, a personal digital assistance or a mobile phone having a module consisting of an IC chip or the like embedded in a brochure-shaped, block-shaped or tag-shaped main body, a data processing apparatus which executes predetermined processing based on data from the portable electronic apparatus, and a data system having the portable electronic apparatus and the data processing apparatus.

Conventionally, in some of portable electronic apparatuses such as an IC card, an access right is set with respect to data stored in an internal memory. However, even in case of data to which an access right is set, its number of times of reading is not restricted. Therefore, an external apparatus having an access permission to data can infinitely read desired data from an IC card.

Further, in a system which uses authentication information stored in a portable electronic apparatus such as an IC card to execute authentication processing, there are a conformation in which authentication processing is performed in the IC card (MOC: Match On Card) and a conformation in which an external apparatus uses biological information stored in the IC card to execute authentication processing (STOC: Storage On Card).

In the authentication processing based on MOC, authentication information stored in the IC card does not have to be output to the outside. Furthermore, in the authentication processing based on MOC, it is easy for the IC card to restrict, e.g., the number of times of authentication processing. Therefore, in the authentication processing based on MOC, safety of the authentication information stored in a memory of the IC card is high. However, the authentication processing based on MOC depends on a throughput capacity in the IC card. Therefore, executing complicated authentication processing or sophisticated processing in the IC card is difficult in terms of operation in some cases. For example, in authentication processing using biological information, processing contents are complicated, and a data amount as authentication information is large. In such a case, authentication processing in a current IC card (authentication processing based on MOC) is practically difficult in terms of operation. Such authentication processing must be executed based on STOC.

In the above-described authentication processing based on STOC, authentication information stored in an IC card must be output to an external apparatus which executes the authentication processing. Moreover, in the authentication processing based on STOC, it is difficult for the IC card to restrict, e.g., the number of times of authentication processing which is executed by an external apparatus. That is, in the conventional authentication processing based on STOC, the external apparatus can read authentication information from the IC card without any restriction, and the external apparatus can execute the authentication processing without limit. Therefore, in the conventional authentication processing based on STOC, security properties of authentication processing and security properties of authentication information itself stored in an IC card may possibly become a problem.

It is an object of one aspect of the present invention to provide a portable electronic apparatus, an IC card, a data processing apparatus and a data processing system having high security properties.

According to one aspect of the present invention, there is provided a portable electronic apparatus comprises an interface which performs data communication with an external apparatus, a memory which stores data restricted in the number of times of reading, a counter which counts the number of times of reading with respect to the data from the memory, and a control section which counts up a value of the counter and reads the data from the memory to be transmitted to the external apparatus through the interface when the value of the counter is less than a predetermined upper limit value, and prohibits reading the data from the memory when the value of the counter is not smaller than the predetermined upper limit value, in a case where a command requesting the reading of the data is received from the external apparatus through the interface.

According to one aspect of the present invention, there is provided an IC card comprises a module, and a main body having the module built therein, the module comprises an interface which performs data communication with an external apparatus, a memory which stores data restricted in the number of times of reading, a counter which counts the number of times of reading with respect to the data from the memory, and a control section which counts up a value of the counter and reads the data from the memory to be transmitted to the external apparatus through the interface when the value of the counter is less than a predetermined upper limit value, and prohibits reading the data from the memory when the value of the counter is not smaller than the predetermined upper limit value, in a case where a command requesting the reading of the data is received from the external apparatus through the interface.

According to one aspect of the present invention, there is provided a data processing apparatus which executes predetermined processing based on data stored in a memory of a portable electronic apparatus, the data processing apparatus comprises: an interface which performs data communication with the portable electronic apparatus, and a control section which executes predetermined processing by using the data received from the portable electronic apparatus and transmits a result of the processing to the portable electronic apparatus when a command requesting the reading of the data which is stored in the memory of the portable electronic apparatus and restricted in the number of times of reading is transmitted and the data is received from the portable electronic apparatus with respect to the command.

According to one aspect of the present invention, there is provided a data processing system comprises a portable electronic apparatus and a data processing apparatus, the portable electronic apparatus comprises: a first interface which performs data communication with the data processing apparatus, a memory which stores data restricted in the number of times of reading, a counter which counts the number of times of reading with respect to the data from the memory, and a first control section which counts up a value of the counter and reads the data from the memory to be transmitted to the data processing apparatus through the first interface when the value of the counter is less than a predetermined upper limit value, and prohibits reading the data from the memory when the value of the counter is not smaller than the predetermined upper limit value, in a case where a command requesting the reading of the data is received from the data processing apparatus, the data processing apparatus comprises a second interface which performs data communication with the portable electronic apparatus, and a second control section which executes predetermined processing by using the data and transmits a result of the processing to the portable electronic apparatus when a command requesting the reading of the data which is stored in the memory of the portable electronic apparatus and restricted in the number of times of reading is transmitted and the data is received from the portable electronic apparatus with respect to the command.

The invention can be more fully understood from the following detailed description when taken in conjunction with the accompanying drawings, in which:
FIG. 1 is a block diagram schematically showing a structural example of an IC card as a portable electronic apparatus and an external apparatus (an authentication processing apparatus) as a data processing apparatus;
FIG. 2 is a flowchart illustrating a flow of authentication processing based on biological information in the external apparatus;
FIG. 3 is a flowchart illustrating a flow of authentication processing based on biological information in the IC card; and
FIG. 4 is a block diagram schematically showing a modification of the external apparatus as a data processing apparatus.

An embodiment according to the present invention will now be described hereinafter with reference to the accompanying drawings.

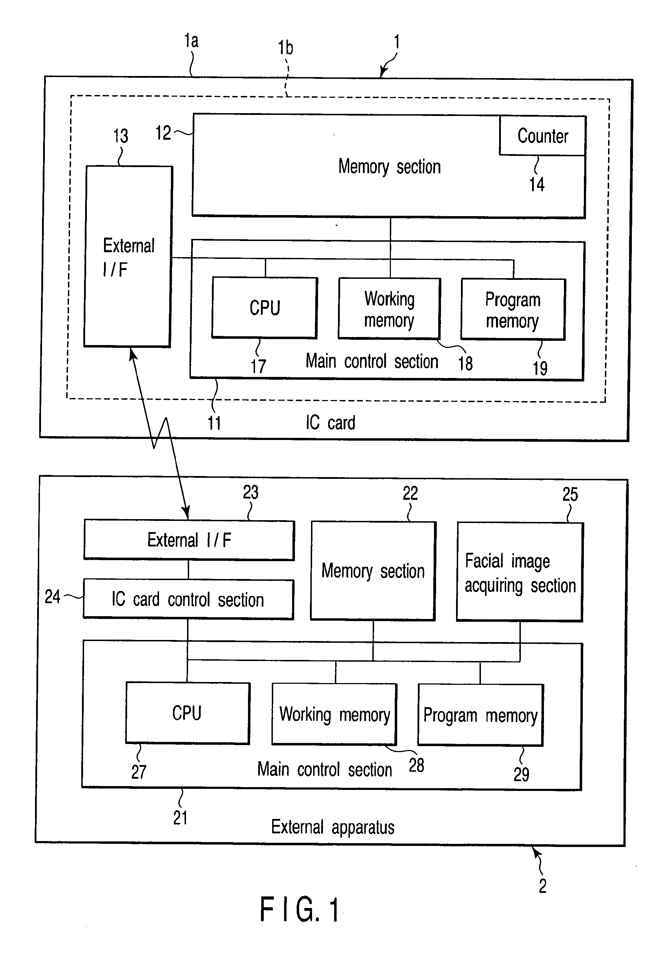

FIG. 1 schematically shows a structural example of an IC card 1 as a portable electronic apparatus and an external apparatus (an authentication processing apparatus) 2 as a data processing apparatus. Further, the IC card 1 and the external apparatus 2 depicted in FIG. 1 constitute an authentication processing system as a data processing system. The authentication processing system depicted in FIG. 1 executes authentication processing using authentication information acquired by an authentication target person and authentication information stored in the IC card 1.

Furthermore, in this embodiment, a description will be given while assuming the authentication processing system which executes authentication processing using a facial image of a person as biological information (biometrics) of a person. However, the authentication processing system can be likewise applied to a system which executes authentication processing based on not only a facial image of a person but also biological information such as an iris, a vein, a fingerprint, voice or a sign. Moreover, the authentication processing system can be likewise applied to a system which executes authentication processing by using other authentication information than biological information. That is, the authentication processing system shown in FIG. 1 can be applied to a system in which the external apparatus 2 performs predetermined processing by using data stored in the IC card 1.

Additionally, in this embodiment, it is assumed that the external apparatus 2 executes authentication processing based on facial image information of a person stored in the IC card 1 and facial image information acquired from an authentication target person. Such authentication processing based on facial image information requires a large throughput capacity. Such authentication processing based on facial image information cannot be executed at a high speed in the IC card 1. Therefore, in the authentication processing system which will be described in this embodiment, the external apparatus 2 executes the authentication processing based on a facial image of a person stored in the IC card 1 and a facial image acquired from a recognition target person. That is, the authentication processing system described in this embodiment is suitable for such an operational conformation which allows the external apparatus to execute processing which cannot be performed with a throughput capacity in the IC card 1 at a high speed.

A structural example of the IC card 1 will now be described.

As shown in FIG. 1, the IC card 1 has a main control section 11, a memory section 12, an external interface 13 and others. The main control section 11, the memory section 12 and the external interface 13 are constituted of a module 1b embedded in a main body 1a of the IC card 1. The module 1b is formed of one or more IC chips and an antenna or an external connection contact portion or the like.

The main control section 11 executes various kinds of control or data processing with respect to the entire IC card 1. The main control section 11 is constituted of, e.g., a CPU 17, a working memory 18 consisting of an RAM or the like, a program memory 19 formed of an ROM or the like. In the main control section 11, the CPU 17 executes a program stored in the program memory 19 or the memory section 12 by using the working memory 18 to realize various kinds of functions. Additionally, the program memory 19 may store key information used for mutual authentication with respect to the external apparatus 2.

The memory section 12 is constituted of a non-volatile memory which stores various kinds of data. Further, the memory section 12 is formed of a rewritable non-volatile memory such as an EEPROM or a flash ROM. The memory section 12 stores a program or various kinds of data executed by the main control section 11 and various kinds of data corresponding to an operational conformation of the IC card 1. For example, the memory section 12 stores facial image information (biological information) of an owner of the IC card 1 as authentication information used to perform authentication processing of a person. Furthermore, the memory section 12 may store key information used for mutual authentication with respect to the external apparatus 2. Moreover, a counter 14 whose count value is counted up or cleared in accordance with control by the main control section 11 is provided in the memory section 12. The counter 14 stores a count value indicative of the number of times of access (the number of times of reading) with respect to a facial image (biological information) as authentication information stored in the memory section 12.

The external interface 13 is an interface which performs data communication with the external apparatus 2. The external interface 13 is constituted of a device corresponding to a data communication conformation of the IC card 1.

For example, when the IC card 1 is a non-contact type (a wireless type) IC card, the external interface 13 is formed of, e.g., an antenna section which transmits/receives electric waves and a communication control section which modulates and demodulates data. The external interface 13 modulates data which is transmitted to the external apparatus and sends the modulated data as an electric wave (a modulated wave), or receives and demodulates a modulated wave from the external apparatus 2. Additionally, when the IC card is a non-contact type IC card, a non-illustrated power supply section generates a power and an operating clock which are supplied to each internal section from a modulated wave received from the external apparatus 2 through the external interface 13. In this case, the power and the operating clock generated by the power supply section are supplied to each section in the IC card 1.

Further, when the IC card 1 is a contact type IC card, the external interface 13 is constituted of a contact portion which physically comes into contact with the external apparatus 2. Furthermore, when the IC card 1 is an IC card, a contact portion as the external interface 13 comes into contact with an IC card terminal portion provided to the external apparatus 2. In this case, a power and an operating clock from the external apparatus 2 are supplied to each section in the IC card 1 through the external interface 13.

A structural example of the external apparatus 2 will now be described.

The external apparatus 2 is constituted of a main control section 21, a memory section 22, an external interface 23, an IC card control section 24, a facial image acquiring section 25 and others.

The main control section 21 controls the entire external apparatus 2. The main control section 21 executes various kinds of control or data processing. The main control section 21 consists of a CPU 27, a working memory 28 formed of, e.g., an RAM, a program memory 29 constituted of, e.g., ROM and others. In the main control section 21, the CPU 27 uses the working memory 28 to execute an operation program stored in the program memory 29 or the memory section 22, thereby realizing various kinds of functions. The program memory 29 may store key information used for mutual authentication with respect to the IC card 1.

The memory section 22 is constituted of, e.g., a rewritable non-volatile memory which stores various kinds of data. For example, the memory section 22 is formed of a hard disk drive, an EEPROM, a flash ROM or the like. Moreover, the memory section 22 also stores a control program or control data. Additionally, the memory section 22 may store key information used for mutual authentication with respect to the IC card 1.

The external interface 23 is an interface which performs data communication with the IC card 1. The external interface 23 is constituted of a device corresponding to a data communication conformation of the IC card 1 like the external interface 13.

For example, when the IC card 1 is a non-contact type (a wireless type) IC card, the external interface 23 consists of an antenna section which transmits and receives electric waves, a communication control section which modulates and demodulates data, and others. The external interface 23 modulates data which is transmitted to the IC card 1 and sends the modulated data as an electric wave (a modulated wave), or receives and demodulates a modulated wave from the IC card 1. Further, when the IC card is a non-contact IC card, the external interface 23 supplies a power and an operating clock required for an operation of the IC card 1 as electric waves to the IC card 1.

Furthermore, when the IC card 1 is a contact type IC card, the external interface 23 consists of a terminal portion or the like which physically comes into contact with a contact portion as the external interface 13 of the IC card 1. Moreover, when the IC card 1 is an IC card, the external interface 23 supplies a power and an operating clock required for an operation of the IC card 1 in a state where it is in physically contact with the contact portion as the external interface 13.

The IC card control section 24 controls data communication with the IC card 1 through the external interface 23.

The facial image acquiring section 25 acquires a facial image (biological information) as authentication information from a recognition target person. The facial image acquiring section 25 is constituted of, e.g., a camera.

An operational example of the thus configured authentication processing system will now be described.

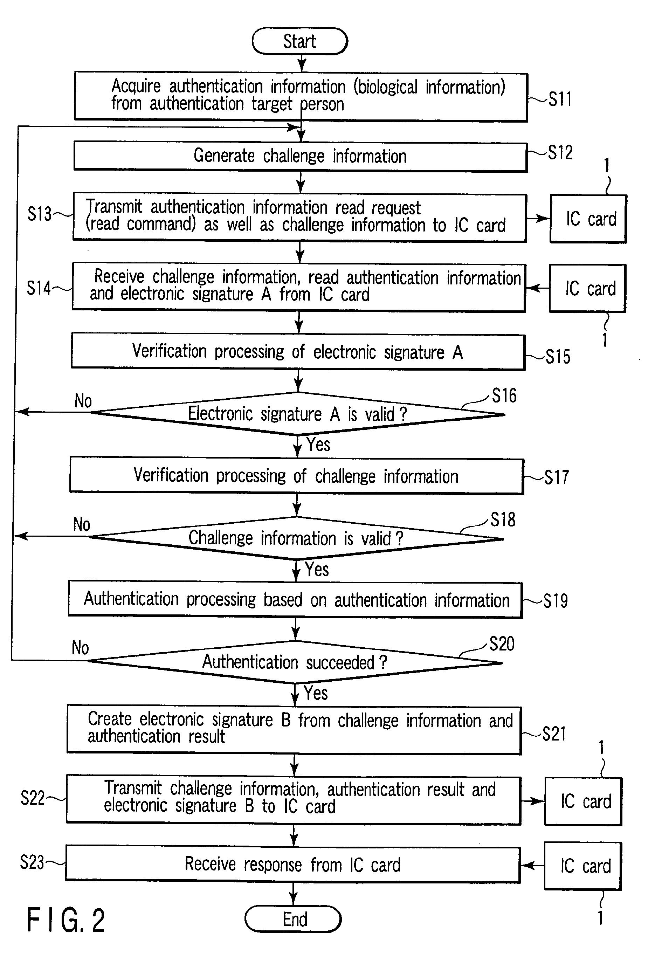

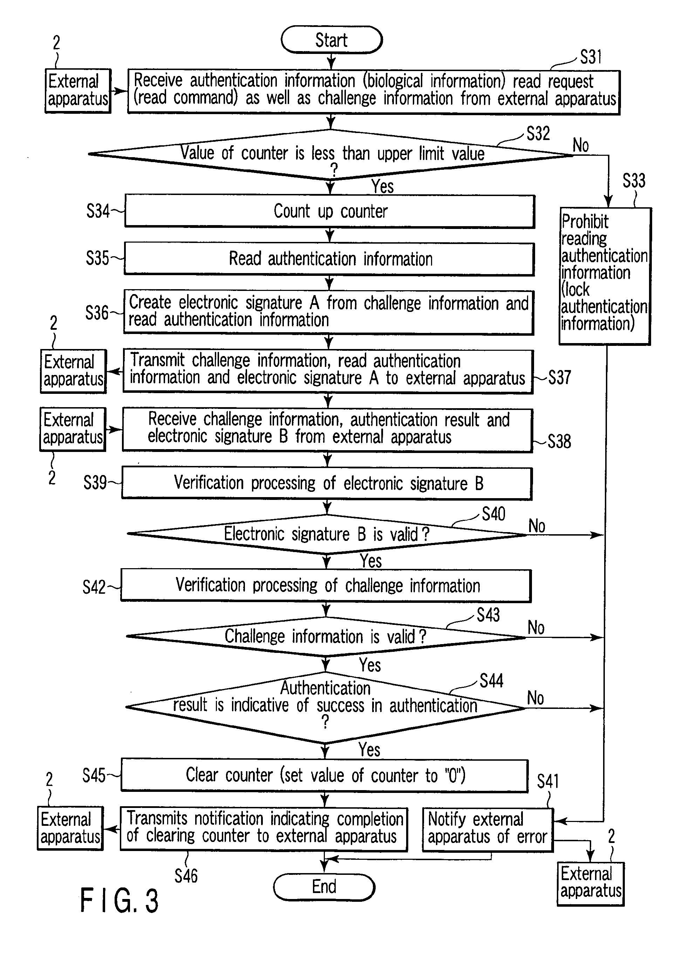

FIG. 2 is a flowchart illustrating an operational example of the external apparatus 2 in authentication processing using facial image information as authentication information (biological information) stored in the IC card. FIG. 3 is a flowchart illustrating an operational example of the IC card 1 corresponding to authentication processing in the external apparatus.

First, in the external apparatus 2, the main control section 21 acquires a facial image information as biological information (authentication information) of an authentication target person from the facial image acquiring section 25 (a step S11). Upon acquiring the facial image information of the authentication target person from the facial image acquiring section 25, the main control section 21 generates challenge information (e.g., a random number) as inherent information required to identify the first recognition processing (a step S12). That is, the challenge information is information which is changed in accordance with each authentication processing (each session) based on a series of authenticating information. In the external apparatus 2 and the IC card 1, each session is recognized (confirmed) based on the challenge information.

When the challenge information is generated, the main control section 21 transmits the generated challenge information as well as a data read request (a read command) requesting the reading of facial image information as authentication information stored in the IC card 1 to the IC card 1 through the IC card control section 24 and the external interface 23 (a step S13). The external apparatus 2 which has transmitted the read command enters a stand-by mode where it waits for a response from the IC card 1.

Additionally, in the IC card 1 which has accepted the facial image information read command as well as the challenge information, the challenge information, the read facial image information and an electronic signature A are transferred to the external apparatus 2 if later-described processing is normally executed. Here, it is assumed that the external apparatus 2 has received the challenge information, the read facial image information and the electronic signature A from the IC card 1 (a step S14). Then, the main control section 21 of the external apparatus 2 verifies the electronic signature A received from the IC card 1 (a step S15).

It is to be noted that there are various kinds of techniques as the electronic signature. The electronic signatures carried out by the various kinds of techniques can be applied to this authentication processing system. In this embodiment, it is assumed that the IC card and the external apparatus use electronic signatures (electronic signatures A and B) in order to confirm validity of their received data in this authentication processing system. Further, it is assumed that later-described processing of creating and verifying electronic signatures is executed in the IC card and the external apparatus based on preset keys for creation of each electronic signature and verification of each signature. However, the processing which enables confirmation of validity of data received by the IC card and the external apparatus is not restricted to the electronic signatures. For example, the IC card and the external apparatus may confirm validity of their received data by a simple encoding and decoding method.

That is, at the step S15, the main control section 21 verifies the electronic signature A received from the IC card 1 by using key information for verification of the electronic signature A (an electronic signature verification key). The electronic signature A is created based on the authentication information (the facial image information), compression information (hash information) of the challenge information and the key information for creation of the electronic signature A (the key for creation of the electronic signature A). Therefore, the main control section 21 of the external apparatus 2 decodes the electronic signature A received from the IC card 1 by using the key information for verification of the electronic signature A (the key for verification of the electronic signature A) to verify whether the decoded data is valid. It is to be noted that the key for verification of the electronic signature A is stored in the memory section 22 or the program memory 29 in association with the IC card 1 in advance.

If it is determined that the electronic signature A received from the IC card 1 is not valid based on the processing of verifying the electronic signature A (a step S16, NO), the main control section 21 returns to the step S12 to repeat the same operation.

Furthermore, if it is determined that the electronic signature A received from the IC card 1 is valid (the step S16, YES), the main control section 21 verifies whether the challenge information received from the IC card 1 together with the electronic signature A is valid (a step S17). Here, the main control section 21 performs verification based on whether the challenge information created at the step S12 matches with the challenge information received from the IC card 1. It is to be noted that the external apparatus 2 can judge whether the IC card 1 is valid based on verification of validity of the electronic signature A received from the IC card 1. Moreover, the challenge information can be stored in the external apparatus 2. Therefore, the processing of verifying validity of the challenge information (the steps S17 and S18) may be omitted.

If it is determined that the challenge information received from the IC card 1 is not valid, i.e., if the challenge information created at the step S12 does not match with the challenge information received from the IC card 1 (the step S18, NO), the main control section 21 returns to the step S12 to repeat the same operation.

If it is determined that the challenge information received from the IC card 1 is valid, i.e., if the challenge information created at the step S12 matches with the challenge information received from the IC card 1 (the step S18, YES), the main control section 21 executes authentication processing based on the facial image information received from the IC card 1 and the facial image information acquired from the authentication target person at the step S11 (a step S19). In the authentication processing at the step S19, a judgment is made upon whether authentication is achieved based on whether a predetermined relationship is attained in the authentication information received from the IC card 1 and the authentication information acquired from the authentication target person at the step S11.

Additionally, in this embodiment, the facial image information is assumed as the authentication information. In this case, in the authentication processing at the step S19, a degree of similarity of the facial image information received from the IC card 1 and the facial image information acquired from the authentication target person at the step S11 is calculated, and a judgment upon whether these pieces of information correspond to the same person based on whether the degree of similarity is not smaller than a predetermined threshold value. That is, in the authentication processing at the step S19, when it is determined that the facial image information received from the IC card 1 and the facial image information acquired from the authentication target person at the step S11 may correspond to the same person (when it is determined that the degree of similarity is not smaller than the predetermined threshold value), the main control section 21 determines that the authentication processing has succeeded. In the authentication processing at the step S19, when it is determined that the facial image information received from the IC card 1 and the facial image information acquired from the authentication target person at the step S11 may not correspond to the same person (when it is determined that the degree of similarity is less than the predetermined threshold value), the main control section 21 determines that the authentication processing has failed.

When authentication has failed by the authentication processing, i.e., when it is determined that the degree of similarity of the facial image acquired from the authentication target person and the facial image is less than the predetermined threshold value (a step S20, YES), the main control section 21 determines that the authentication processing has failed and returns to the step S12 to repeat the same operation. It is to be noted that the external apparatus 2 may notify the IC card 1 of a result of the authentication processing even though authentication has failed by the authentication processing. In this case, the main control section 21 may advance to a step S21 to execute processing of notifying the IC card 1 of the fact that the authentication processing has failed as an authentication result.

When authentication has succeeded by the authentication processing, i.e., when the degree of similarity of the facial image acquired from the authentication target person and the facial image is not smaller than the predetermined threshold value (the step S20, YES), the main control section 21 determines that the facial image acquired from the authentication target person and the facial image information received from the IC card 1 are the facial images of the same person. Further, when authentication has succeeded by the authentication processing, the main control section 21 creates an electronic signature B which proves the result of the authentication processing and validity of the challenge information based on the result of the authentication processing, the compression information (hash information) of the challenge information generated at the step S12 and the key information for creation of the predetermined electronic signature B (a key for creation of the electronic signature B (a step S21). It is to be noted that the key for creation of the electronic signature B is stored in the program memory 29 or the memory section 22 in advance.

When the electronic signature B is created, the main control section 21 transmits the electronic signature B generated at the step S21, the authentication result and the challenge information to the IC card 1 (a step S22). In this case, the main control section 21 receives a response from the IC card 1 to terminate the authentication processing (a step S23).

Processing in the IC card 1 will now be described.

The IC card 1 is configured to execute various kinds of processing in accordance with the above-described operations of the external apparatus 2.

That is, the IC card 1 first receives a read command requesting the reading of the authentication information and the challenge information supplied from the external apparatus 2 through the external interface 12 (a step S31). Upon receiving the challenge information and the data read request transmitted from the external apparatus 2, the main control section 11 judges whether a value of the counter 14 in the memory section 12 is less than a predetermined upper limit value (a step S32). It is to be noted that the predetermined upper limit value is stored in the memory section 12 or the program memory 19 in advance.

When it is determined that the value of the counter 14 is not smaller than the upper limit value (the step S32, NO), the main control section 21 executes prohibition processing of prohibiting reading facial image information as authentication information (biological information) which has been requested to be read by the command (a step S33). In this case, the main control section 11 of the IC card 1 responds to the external apparatus 2 of the fact that reading the authentication information has been prohibited, and terminates the processing.

It is to be noted that the prohibition processing may be processing of locking the authentication information stored in the memory section 12 or processing of prohibiting an operation (stopping an operation) of the IC card 1. In the IC card 1 which has executed such prohibition processing, the authentication information may be recovered to be read by, e.g., a specific management command alone.

When it is determined that the value of the counter 14 is less than the predetermined upper limit value (the step S32, YES), the main control section 11 counts up the counter 14 (adds "1" to the value of the counter 14) (a step S34). When the counter 14 is counted up, the main control section 11 executes processing of reading facial image information as authentication information from the memory section 12 (a step S35). In this read processing, it is assumed that the CPU 17 of the main control section 11 stores in the working memory 18 in the main control section 11 the facial image information as the authentication information stored in the memory section 12.

Furthermore, in the procedure of the steps S34 and S35, the IC card 1 is configured to read the facial image information as the authentication information after counting up the value of the counter 14. In other words, according to the above-described processing procedure, the value of the counter 14 is counted up when reading the authentication information from the memory section 12 is started. In this case, even if a read command is repeatedly supplied to fraudulently acquire the authentication information fed from the memory section 12 to the working memory 18 by tapping or the like, reading the authentication information is prohibited when a predetermined number of times is reached. As a result, security properties of the authentication information are improved.

Upon reading the authentication information (the facial image information) from the memory section 12, the main control section 11 creates the electronic signature A which proves validity of the facial image information and the challenge information based on the read facial image, compression information (hash information) of the received challenge information and key information for creation of the electronic signature A (a key for creation of the electronic signature A) (a step S36). It is to be noted that the key for creation of the electronic signature A is stored in the memory section 12 or the program memory 19 in advance. It is to be noted that the challenge information may not be transmitted to the external apparatus 2. In this case, it is good enough for the main control section 11 to create the electronic signature A based on, e.g., the read authentication information (the facial image information) and the key for creation of the electronic signature A.

When the electronic signature A is created, the main control section 11 transmits the read facial image information, the challenge information and the electronic signature A to the external apparatus 2 through the external interface 13 (a step S37). The IC card 1 which has received these pieces of data enters a stand by mode where it waits for an authentication result based on the facial image information fed from the external apparatus 2. On the other hand, the external apparatus 2 which has received the read facial image information, the challenge information and the electronic signature A transmits the authentication result, the challenge information and the electronic signature B based on the above-described processing procedure.

In the standby mode where the IC card 1 waits for the authentication result from the external apparatus 2, upon receiving the authentication result, the challenge information and the electronic signature B from the external apparatus 2 through the external interface 13, the control section 11 in the IC card 1 executes processing of verifying validity of the received electronic signature B by using key information for verification of the electronic signature B (key for verification of the electronic signature B) (a step S39). It is assumed that the key for verification of the electronic signature B is stored in the memory section 12 or the program memory 19 in association with the external apparatus 2 in advance.

When it is determined that the electronic signature B received from the external apparatus 2 is not valid (a step S40, NO), the main control section 11 transmits an error status to the external apparatus 2 (a step S41) and terminates the authentication processing.

Furthermore, when it is determined that the electronic signature B received from the external apparatus 2 is valid (the step S40, YES), the main control section 11 executes processing of verifying validity of the challenge information received from the external apparatus 2 (a step S42). The challenge information verification verifies whether the challenge information transmitted at the step S37 (the challenge information received at the steps S31) matches with the challenge information received from the external apparatus 2 at the step S38. The challenge information is generated in the external apparatus in accordance with each authentication processing. Therefore, at the step S42, whether a series of processing is authentication processing in the same session is verified based on the challenge information. For example, when the challenge information is different, it is determined that the received authentication result is authentication processing executed in a different session.

When it is determined that the challenge information received at the step S38 is invalid by verification of the challenge information, i.e., when the challenge information transmitted at the step S37 does not match with the challenge information received at the step S38 (a step S43, NO), the main control section 11 transmits an error status to the external apparatus 2 (the step S41) and terminates the authentication processing.

When it is determined that the challenge information received at the step S38 is valid, i.e., when the challenge information transmitted at the step S37 matches with the challenge information received at the step S38 (the step S43, YES), the main control section 11 confirms whether the authentication processing using the facial image in the external apparatus 2 has succeeded based on the result of the authentication processing received from the external apparatus 2 (a step S44). When it is determined that the authentication processing using the facial image in the external apparatus 2 has failed, the main control section 11 transmits an error status to the external apparatus 2 (the step S44, NO) and terminates the authentication processing.

When it is determined that the authentication processing using the facial image in the external apparatus 2 has succeeded (the step S44, YES), the main control section 11 clears a value of the counter 14 (a step S45). When the value of the counter 14 is cleared, the main control section 11 transmits a notification of completion of clearing the counter 14 (completion of the authentication processing) to the external apparatus 2 (a step S46) and terminates the authentication processing.

As described above, in the IC card is provided the counter which counts the number of times of execution of reading facial image information as authentication information used for authentication processing in the external apparatus, and reading the facial image information as the authentication information is prohibited when a value of the counter has reached a predetermined upper limit value. As a result, a function of restricting the number of times of reading with respect to data such as authentication information required for processing in the external apparatus can be provided in the IC card. As a result, the number of times of reading can be restricted with respect to data which must be externally output for processing in the external apparatus. Additionally, setting the upper limit value to an infinite number can release the restriction in the number of times of reading with respect to the authentication information. That is, setting the upper limit value can switch a security level with respect to authentication information stored in the memory.

Further, the external apparatus applies an electronic signature to an authentication result of facial image information acquired from the IC card and an facial image obtained from a user and then notifies the IC card. Upon receiving the authentication result and the electronic signature from the external apparatus, the IC card verifies the electronic signature received from the external apparatus. When the electronic signature received from the external apparatus is valid and the authentication result is indicative of a success in authentication, the IC card clears the counter section. Furthermore, when the validity of the electronic signature received from the external apparatus cannot be confirmed, or when the authentication result is indicative of a failure in authentication, the IC card does not clear a value of the counter.

Therefore, the IC card can set the number of times of reading authentication information to a finite number with respect to a fraudulent response from the external apparatus or a failure of authentication processing in the external apparatus. That is, even in case of an IC card which is used in a system (STOC; Storage On Card) in which the external apparatus utilizes authentication information stored in a memory of the IC card to execute authentication processing, reading the authentication information stored in the IC card can be restricted. As a result, in the IC card, security properties for authentication information can be improved.

Furthermore, the external apparatus allows single collation processing with respect to a single operation of reading authentication information by the IC card. According to this configuration, the number of times of authentication processing executed by the external apparatus can be restricted by a limitation in the number of times of reading authentication information by the IC card. In this case, a value counted as the number of times of reading authentication information by the IC card becomes the number of times of authentication processing. In other words, when the external apparatus executes single authentication processing with respect to a single operation of reading authentication information by the IC card, the IC card can restrict the number of times of authentication processing in the external apparatus.

A modification of the authentication processing system will now be described.

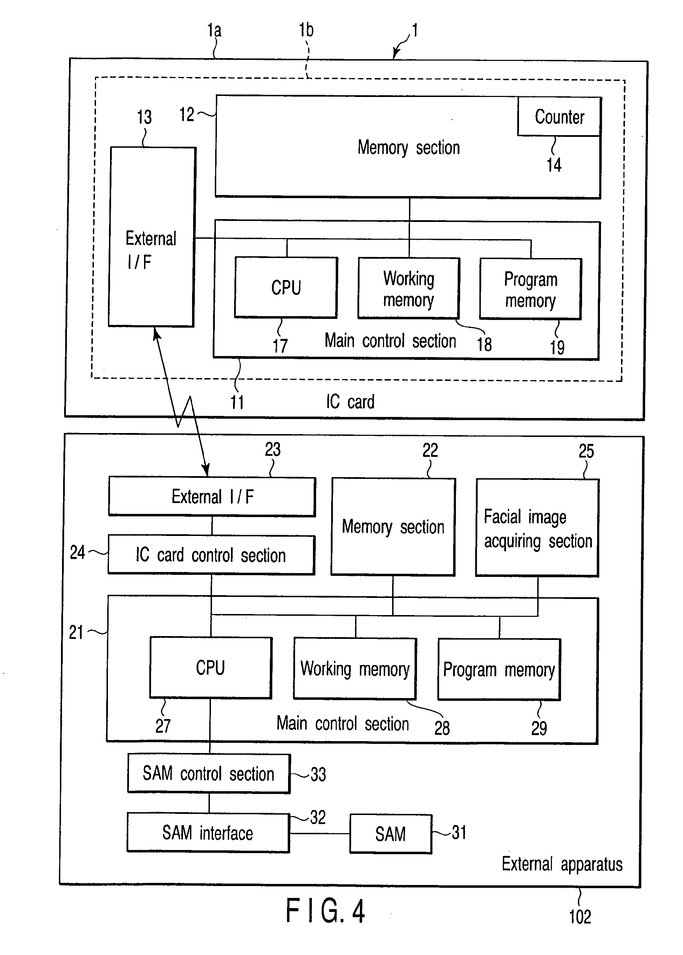

FIG. 4 is a block diagram showing a structural example as a modification of the authentication processing system. It is to be noted that, in the authentication processing system depicted in FIG. 4, a structure of an IC card 1 is the same as that illustrated in FIG. 1. Therefore, FIG. 4 shows a structural example as a modification of the external apparatus 102.

In the external apparatus 2 of the structural example shown in FIG. 1, a main control section 21 realizes the above-described processing. On the other hand, in the external apparatus 102 of the structural example shown in FIG. 4, of the above-described processing, processing which requires security properties in particular is executed by a dedicated module. The external apparatus 102 of the structural example shown in FIG. 4 has, as a dedicated module, a known SAM (Secure Application Module) which processes data with a predetermined security level being assured.

That is, as shown in FIG. 4, the external apparatus 102 has a main control section 21, a memory section 22, an external interface 23, an IC card control section 24, a facial image acquiring section 25, an SAM 31, an SAM interface 32, an SAM control section 33 and others. The external apparatus 102 shown in FIG. 4 has a configuration in which the SAM 31, the SAM interface 32 and the SAM control section 33 are added to the external apparatus 2 depicted in FIG. 1. Therefore, structures other than the SAM 31, the SAM interface 32 and the SAM control section 33 are the same as those of the external apparatus 2 depicted in FIG. 1, thereby omitting a detailed explanation.

The SAM 31 executes data processing with a predetermined security level being assured. The SAM interface 32 is an interface which performs communication with the SAM 31. The SAM control section 33 controls communication with the SAM 31 through the SAM interface 32. Therefore, the main control section 21 requests the SAM control section 33 various kinds of processing to allow the SAM 31 to execute various kinds of processing.

Moreover, the SAM 31 has damper resisting properties. As a result, it is impossible to fraudulently engage with processing in the SAM 31 from the outside. For example, in the above-described processing procedure (see FIG. 2), the SAM 31 executes generation of challenge information in the external apparatus (the step S12), verification processing of the electronic signature A (the step S15), verification processing of challenge information (the step S17), authentication processing (the step S19), generation processing of the electronic signature B (the step S21) and others. Additionally, in the SAM 31, authentication processing is set to be executed once as the authentication processing at the step S19 with respect to authentication information received from the IC card 1 (authentication information read from the memory 12 by the IC card 1).

Further, the description has been given as to the case where the portable electronic apparatus is the IC card in the foregoing embodiment. However, the portable electronic apparatus is not restricted to the IC card. For example, the portable electronic apparatus can be applied to a personal digital assistance, a mobile phone and others. Furthermore, the portable electronic apparatus is not restricted to a device in which a module consisting of an IC chip or the like is embedded in a card-shaped main body like the IC card. For example, the portable electronic apparatus can also be applied to an electronic apparatus in which a module having the above-described function is embedded in a brochure-shaped, a block-shaped or a tag-shaped main body.

## Claims

1. A portable electronic apparatus (1) **characterized by** comprising:
an interface (13) which performs data communication with an external apparatus (2);
a memory (12) which stores data restricted in the number of times of reading;
a counter (14) which counts the number of times of reading with respect to the data from the memory (12); and
a control section (11) which counts up a value of the counter (14) and reads the data from the memory (12) to be transmitted to the external apparatus (2) through the interface (13) when the value of the counter (14) is less than a predetermined upper limit value, and prohibits reading the data from the memory (12) when the value of the counter (14) is not smaller than the predetermined upper limit value, in a case where a command requesting the reading of the data is received from the external apparatus (2) through the interface (13).

2. The portable electronic apparatus (1) according to claim 1,
**characterized in that** the memory (12) stores authentication information used for authentication processing in the external apparatus (2) as the data which is restricted in the number of times of reading.

3. The portable electronic apparatus (1) according to claim 1,
**characterized in that** the control section (11) further clears the value of the counter (14) when a notification indicating that processing using the data read from the memory (12) has been normally completed is received from the external apparatus (2).

4. The portable electronic apparatus (1) according to claim 2,
**characterized in that** the control section (11) further clears the value of the counter (14) when a notification indicating that authentication processing using the authentication information read from the memory (12) has succeeded is received from the external apparatus (2).

5. An IC card (1) **characterized by** comprising:
an module (1a); and
a main body (1b) having the module built therein,
the module (1a) including: an interface (13) which performs data communication with an external apparatus (2); a memory (12) which stores data restricted in the number of times of reading; a counter (14) which counts the number of times of reading with respect to the data from the memory (12); and a control section (11) which counts up a value of the counter (14) and reads the data from the memory (12) to be transmitted to the external apparatus (2) through the interface (13) when the value of the counter (14) is less than a predetermined upper limit value, and prohibits reading the data from the memory (12) when the value of the counter (14) is not smaller than the predetermined upper limit value, in a case where a command requesting the reading of the data is received from the external apparatus (2) through the interface (13).

6. The IC card (1) according to claim 5,
**characterized in that** the memory (12) stores authentication information used for authentication processing in the external apparatus (2) as the data which is restricted in the number of times of reading.

7. The IC card (1) according to claim 5,
**characterized in that** the control section (11) further clears the value of the counter (14) when a notification indicating that processing using the data read from the memory (12) has been normally completed is received from the external apparatus (2).

8. The IC card (1) according to claim 6,
**characterized in that** the control section (11) further clears the value of the counter (14) when a notification indicating that authentication processing using the authentication information read from the memory (12) has succeeded is received from the external apparatus (2).

9. A data processing apparatus (2) which executes predetermined processing based on data stored in a memory (12) of a portable electronic apparatus (1), **characterized by** comprising:
an interface (23) which performs data communication with the portable electronic apparatus (1); and a control section (21) which executes predetermined processing by using the data received from the portable electronic apparatus (1) and transmits a result of the processing to the portable electronic apparatus (1) when a command requesting the reading of the data which is stored in the memory (12) of the portable electronic apparatus (1) and restricted in the number of times of reading is transmitted and the data is received from the portable electronic apparatus (1) with respect to the command.

10. The data processing apparatus (2) according to claim 9, **characterized by** further comprising:
an authentication information acquiring section (25) which acquires authentication information from an authentication target person,
wherein, when a command requesting the reading of authentication information stored in the memory (12) of the portable electronic apparatus (1) is transmitted and the authentication information is received from the portable electronic apparatus (1) with respect to the command, the control section (21) executes authentication processing based on the authentication information acquired through the authentication information acquiring section (25) and the authentication information received from the portable electronic apparatus (1) and transmits a result of the authentication processing to the portable electronic apparatus (1).

11. The data processing apparatus (2) according to claim 10,
**characterized in that** the authentication information acquiring section (25) acquires biological information as the authentication information from the authentication target person, and
the control section (21) executes authentication processing which authenticates whether the biological information acquired through the authentication information acquiring section (25) and biological information received from the portable electronic apparatus (1) are biological information of the same person and transmits a result of the authentication processing to the portable electronic apparatus (1) when a command requesting the reading of biological information stored in the memory (12) of the portable electronic apparatus (1) is transmitted and the biological information is received from the portable electronic apparatus (1) with respect to the command.

12. The data processing apparatus (2) according to claim 9,
**characterized in that** the control section (21) uses the data received from the portable electronic apparatus (1) to execute predetermined processing once and transmits a result of the processing to the portable electronic apparatus (1).

13. The data processing apparatus (2) according to claim 9, **characterized by** further comprising a security application module (26) which processes data in a state where a predetermined security level is assured,
wherein the control section (32) allows the security application module (26) to execute the predetermined processing.

14. A data processing system **characterized by** comprising a portable electronic apparatus (1) and a data processing apparatus (2),
the portable electronic apparatus (1) comprising:
a first interface (13) which performs data communication with the data processing apparatus (2);
a memory (12) which stores data restricted in the number of times of reading;
a counter (14) which counts the number of times of reading with respect to the data from the memory (12); and
a first control section (11) which counts up a value of the counter (14) and reads the data from the memory (12) to be transmitted to the data processing apparatus (2) through the first interface (13) when the value of the counter (14) is less than a predetermined upper limit value, and prohibits reading the data from the memory (12) when the value of the counter (14) is not smaller than the predetermined upper limit value, in a case where a command requesting the reading of the data is received from the data processing apparatus (2),
the data processing apparatus (2) comprising:
a second interface (23) which performs data communication with the portable electronic apparatus (1); and
a second control section (21) which executes predetermined processing by using the data and transmits a result of the processing to the portable electronic apparatus (1) when a command requesting the reading of the data which is stored in the memory (12) of the portable electronic apparatus (1) and restricted in the number of times of reading is transmitted and the data is received from the portable electronic apparatus (1) with respect to the command.

15. The data processing system according to claim 14,
**characterized in that** the memory (12) of the portable electronic apparatus (1) stores authentication information used for authentication processing in the data processing apparatus (2) as the data which is restricted in the number of times of reading,
the data processing apparatus (2) further has an authentication information acquiring section (25) which acquires authentication information from an authentication target person, and
the second control section (21) of the data processing apparatus (2) executes authentication processing based on the authentication information acquired through the authentication information acquiring section (25) and authentication information received from the portable electronic apparatus (1) and transmits a result of the authentication processing to the portable electronic apparatus (1) when a command requesting the reading of the authentication information stored in the memory (12) of the portable electronic apparatus (1) is transmitted and the authentication information is received from the portable electronic apparatus (1) with respect to the command.

16. The data processing system according to claim 15,
**characterized in that** the memory (12) of the portable electronic apparatus (1) stores biological information used for authentication processing in the data processing apparatus (2) as the data which is restricted in the number of times of reading,
the authentication information acquiring section (25) of the data processing apparatus (2) acquires biological information as authentication information from the authentication target person, and
the second control section (21) of the data processing apparatus (2) executes authentication processing which authenticates whether the biological information acquired through the authentication information acquiring section (25) and biological information received from the portable electronic apparatus (1) are biological information of the same person and transmits a result of the authentication processing to the portable electronic apparatus (1) when a command requesting the reading of the biological information stored in the memory (12) of the portable electronic apparatus (1) is transmitted and the biological information is received from the portable electronic apparatus (1) with respect to the command.

17. The data processing system according to claim 14,
**characterized in that** the first control section (11) of the portable electronic apparatus (1) further clears the value of the counter (14) when a notification indicating that processing using the data read from the memory (12) has been normally completed is received from the external apparatus (2).

18. The data processing system according to claim 15,
**characterized in that** the first control section (11) of the portable electronic apparatus (1) further clears the value of the counter (14) when a notification indicating that authentication processing using the authentication information read from the memory (12) has succeeded is received from the external apparatus (2).

19. The data processing system according to claim 14,
**characterized in that** the second control section (21) of the data processing apparatus (2) uses the data received from the portable electronic apparatus (1) to execute predetermined processing once and transmits a result of the processing to the portable electronic apparatus (1).

20. The data processing system according to claim 14,
**characterized in that** the data processing apparatus (2) has a security application module (26) which processes data in a state where a predetermined security level is assured, and
the second control section (21) of the data processing apparatus (2) allows the security application module (26) to execute the predetermined processing.
